(19) Europäisches Patentamt
European Patent Office
Office européen des brevets

(11) **EP 3 370 925 B1**

(12) **EUROPÄISCHE PATENTSCHRIFT**

(45) Veröffentlichungstag und Bekanntmachung des Hinweises auf die Patenterteilung:
**12.08.2020   Patentblatt 2020/33**

(21) Anmeldenummer: **16787813.1**

(22) Anmeldetag: **25.10.2016**

(51) Int Cl.:
**B25J 9/16** *(2006.01)*     **G05B 19/423** *(2006.01)*

(86) Internationale Anmeldenummer:
**PCT/EP2016/075674**

(87) Internationale Veröffentlichungsnummer:
**WO 2017/076697 (11.05.2017 Gazette 2017/19)**

(54) **ROBOTER MIT ANSTEUERUNG ZUR DISKRETISIERTEN MANUELLEN EINGABE VON POSITIONEN UND/ODER POSEN**

ROBOT WITH CONTROL SYSTEM FOR DISCRETE MANUAL INPUT OF POSITIONS AND/OR POSES

ROBOT ET COMMANDE SERVANT À L'ENTRÉE MANUELLE DISCRÉTISÉE DE POSITIONS ET/OU POSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2015   DE 102015118918**

(43) Veröffentlichungstag der Anmeldung:
**12.09.2018   Patentblatt 2018/37**

(73) Patentinhaber: **Franka Emika GmbH
80797 München (DE)**

(72) Erfinder: **HADDADIN, Sami
30173 Hannover (DE)**

(74) Vertreter: **Rösler Rasch van der Heide & Partner
Bodenseestraße 18
81241 München (DE)**

(56) Entgegenhaltungen:
**WO-A1-2015/113757     US-A- 5 980 082**

- **CONKUR E S ED - FERRÁNDEZ JOSÉ MANUEL PAZ FÉLIX DE LA LOPE JAVIER DE: "Path planning using potential fields for highly redundant manipulators", ROBOTICS AND AUTONOMOUS SYSTEMS, ELSEVIER SCIENCE PUBLISHERS, AMSTERDAM, NL, Bd. 52, Nr. 2-3, 31. August 2005 (2005-08-31), Seiten 209-228, XP004988145, ISSN: 0921-8890, DOI: 10.1016/J.ROBOT.2005.03.005**
- **Luigi Biagiotti ET AL: "A Multimodal Haptic Mouse for Visually Impaired People", Proceedings Enactive 2005, 17. November 2005 (2005-11-17), XP055333848, Genoa, Italy Gefunden im Internet: URL:http://citeseerx.ist.psu.edu/viewdoc/d ownload?doi=10.1.1.516.8558&rep=rep1&type= pdf [gefunden am 2017-01-10]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Roboter aufweisend eine bewegliche, mehrgliedrige mittels Aktoren antreibbare Roboterstruktur, insbesondere einen Roboterarm, wobei der Roboter derart ausgelegt und eingerichtet ist, dass der Roboter in einem Eingabemodus durch Bewegen der Roboterstruktur durch einen Nutzer Positionen, Posen und/oder Bewegungsabläufe der beweglichen Roboterstruktur in einem Arbeitsraum des Roboters lernt. Der Lernvorgang wird auch als sogenannter "Teach-in" Vorgang bezeichnet.

Besonders bei modernen Robotern, die mit Menschen interagieren, werden Positionen, Posen und/oder Bewegungsabläufe von beweglichen mehrgliedrigen Roboterstrukturen häufig durch einen "Teach-in" Vorgang dem Roboter vermittelt. Während des "Teach-in" Vorgangs werden die Aktoren der antreibbaren Roboterstruktur typischerweise derart angesteuert, dass für die Roboterstruktur eine Gravitationskraftkompensation erfolgt und die Roboterstruktur in einem zugeordneten Arbeitsraum durch einen Menschen ansonsten weitgehend frei bewegbar ist. Dies erfolgt typischerweise mittels Drehmomentregelung, Kraftregelung oder intrinsischer Rücktreibbarkeit des Roboters.

Nachteilig an den sogenannten "Teach-in" Vorgängen ist die begrenzte Geschwindigkeit und Genauigkeit beim Lernen von Positionen, Posen und Bewegungsabläufen einer antreibbar beweglichen Roboterstruktur.

Die Aufgabe der Erfindung ist es, einen Roboter anzugeben, der einen verbesserten "Teach-in" Vorgang ermöglicht. Die internationale Veröffentlichung vom 6.8.2015 mit der Veröffentlichungsnummer WO2015/113757 beschreibt ein Verfahren zum Steuern eines Roboters, bei dem innerhalb eines Arbeitsraums von für einen Referenzpunkt des Roboters erreichbaren Aufenthaltspunkten wenigstens ein Fangpunkt definiert wird, das Ausmaß einer Betätigung eines Bedienelements erfasst wird, und wenn das Ausmaß der Betätigung unter einer Umschaltschwelle liegt, der Referenzpunkt zu einem dem aktuellen Aufenthaltspunkt benachbarten Fangpunkt bewegt wird, und wenn das Ausmaß der Betätigung über der Umschaltschwelle liegt, der Referenzpunkt kontinuierlich bewegt wird.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft einen Roboter aufweisend eine bewegliche, mehrgliedrige, mittels Aktoren antreibbare Roboterstruktur, wobei an der beweglichen Roboterstruktur zumindest ein ausgezeichnetes Strukturelement S mit zumindest einem auf dem Strukturelement S ausgezeichneten Punkt $P_S$ definiert ist.

Der Roboter ist derart ausgelegt und eingerichtet, dass der Roboter in einem Eingabemodus Positionen $POS_{PS}$ des Punktes $P_S$ und/oder Posen des Strukturelements S in einem Arbeitsraum des Roboters lernt, wobei der Nutzer zur Bewegung des Strukturelements S auf die bewegliche Roboterstruktur eine Eingabekraft $\vec{F}_{EING}$ ausübt, die sich dem Punkt $P_S$ als $\vec{F}_{EING,PS}$ vermittelt und/oder die sich dem Strukturelement S als Moment $\vec{M}_{EING,S}$ vermittelt.

Vorliegend wird der Begriff "Pose" entsprechend der DIN EN ISO 8373 verstanden. Die Pose des Strukturelements S ist somit die Kombination von Position und Orientierung des Strukturelements S im dreidimensionalen Raum.

Der Roboter weist darüber hinaus eine Steuervorrichtung auf, die derart ausgeführt und eingerichtet ist, dass in dem Eingabemodus die Aktoren auf Basis eines vorgegebenen, den Arbeitsraum zumindest teilweise ausfüllenden, virtuellen 3D-Gitters derart angesteuert werden, dass das Strukturelement S mit einer, von der aktuellen Position $POS_{PS}$ des Punktes $P_S$ im 3D-Gitter abhängigen vorgegebenen Kraft $\vec{F}_{GRID}(POS_{PS})$ auf den dazu nächstliegenden Gitterpunkt des 3D-Gitters oder in ein um den dazu nächstliegenden Gitterpunkt des 3D-Gitters definiertes Gitterpunktvolumen bewegt wird, wobei der Punkt $P_S$ des Strukturelements S im Falle dass gilt: $|\vec{F}_{EING,PS}| < |\vec{F}_{GRID}(POS_{PS})|$ an diesem nächstliegenden Gitterpunkt oder in diesem Gitterpunktvolumen verbleibt. Das virtuelle 3D-Gitter kann beispielsweise raumfest oder zeitvariant sein. Die Definition des virtuellen 3D-Gitters kann sich beispielsweise autonom aufgrund von Schaltbedingungen oder aufgrund einer Eingabe eines Nutzers ändern.

Die aktuelle Position $POS_{PS}$ des Punktes $P_S$ relativ zum 3D-Gitter kann beispielsweise mittels einer Sensorik zur Erfassung einer aktuellen Pose der beweglichen Roboterstruktur oder durch Auswertung von Steuerparametern zur Ansteuerung der Aktoren ermittelt werden. Entsprechende Vorrichtungen und Verfahren sind dem Stand der Technik zu entnehmen. Vorteilhaft wird die aktuelle Position $POS_{PS}$ des Punktes $P_S$ relativ zum 3D-Gitter mittels einer Sensorik zur Erfassung der aktuellen Pose der beweglichen Roboterstruktur und einem CAD Datensatz der Roboterstruktur und/oder einem Oberflächenmodell der Roboterstruktur ermittelt.

Die aktuelle Position $POS_{PS}$ des Punktes $P_S$ im 3D-Gitter kann aufgrund der manuellen Bewegung des Strukturelements S durch einen Nutzer eine Position sein, die zwischen den Gitterpunkten des 3D-Gitters liegt, sodass die für das 3D-Gitter vorgegebene Kraft $\vec{F}_{GRID}(POS_{PS})$ vorteilhaft zu einer quasi "gerasterten" translatorischen Eingabe von Positionen $POS_{PS,Eing}$ des Punktes $P_S$ im Arbeitsraum führt, da immer dann, wenn die aktuelle Position $POS_{PS}$ des Punktes $P_S$ nicht einem Gitterpunkt des 3D-Gitters entspricht oder innerhalb eines Gitterpunktvolumens des 3D-Gitters liegt, die Aktoren der Roboterstruktur derart angesteuert werden, dass der Punkt $P_S$ auf den nächstliegenden Gitterpunkt bzw. das nächstliegende Gitterpunktvolumen bewegt wird.

Alternativ hierzu kann, wenn die aktuelle Position $POS_{PS}$ des Punktes $P_S$ in der Mitte eines symmetrischen Potenzials zu liegen kommt, wobei sich die Kräfte $\vec{F}_{GRID}(POS_{PS})$ ausgleichen, der Punkt $P_S$ in dieser Position verbleiben. Durch manuelle Eingabe des Nutzers kann der Punkt $P_S$ dann in Richtung eines nächstliegenden Gitterpunktes verschoben werden.

Die Speicherung einer Position $POS_{PS,Eing}$ des Punktes $P_S$ bei einem "Teach-in" Verfahren erfolgt vorteilhaft nur dann, wenn die Position $POS_{PS}$ des Punktes $P_S$ einem Gitterpunkt des 3D-Gitters entspricht bzw. bzw. die Position $POS_{PS}$ des Punktes $P_S$ innerhalb eines vorstehend definierten Gittervolumens liegt. In die Gitterpunkte des 3D-Gitters bzw. in die Gittervolumina des 3D-Gitters rastet der Punkt $P_S$ quasi ein. Somit ist die Eingabe bzw. Speicherung von Positionen $POS_{PS,Eing}$ des Punktes $P_S$ vorteilhaft nur mit einer räumlichen Auflösung möglich, die dem vorgegebenen 3D-Gitter entspricht.

Vorteilhaft erfolgt eine Speicherung bzw. eine Eingabe einer Position $POS_{PS,Eing}$ des Punktes $P_S$ bei einem "Teach-in" Verfahren selbst wenn sich der Punkt $P_S$ an einem Gitterpunkt oder in einem Gittervolumen des 3D-Gitters befindet, nur dann, wenn ein mit dem Roboter verbindbares oder verbundenes Eingabemittel vom Nutzer betätigt wird. Dieses Eingabemittel kann beispielsweise ein Taster sein.

Ist der Betrag der Kraft $|\vec{F}_{EING,PS}|$, die sich dem Punkt $P_S$ bei einer Bewegung der Roboterstruktur durch einen Nutzer vermittelt, größer als der Betrag der vorgegebenen Kraft $|\vec{F}_{GRID}(POS_{PS})|$, kann das Strukturelement bzw. die Roboterstruktur translatorisch bewegt werden. Ist der Betrag der Kraft $|\vec{F}_{EING,PS}|$, die sich dem Punkt $P_S$ bei einer Bewegung der Roboterstruktur durch einen Nutzer vermittelt, kleiner als der Betrag der vorgegebenen Kraft $|\vec{F}_{GRID}(POS_{PS})|$, kann das Strukturelement S bzw. die Roboterstruktur nicht oder nur im Rahmen einer vordefinierten Umgebung bewegt werden, sondern der Punkt $P_S$ verbleibt an dem nächstliegenden Gitterpunkt oder dem entsprechenden Gittervolumen des 3D-Gitters.

Der Begriff "3D-Gitter" steht vorliegend für ein beliebiges 3D-Gitter. Das 3D-Gitter kann insbesondere strukturiert oder nicht strukturiert, regulär oder nicht regulär, orthogonal oder nicht orthogonal sein. Insbesondere kann die Dichte der Gitterpunkte des 3D-Gitters räumlich variieren. Die Gitterpunkte des 3D-Gitters können sich mit der Zeit t verändern, d.h. das 3D-Gitter ist zeitvariabel.

Alternativ oder zusätzlich ist die Steuervorrichtung derart ausgeführt und eingerichtet, dass in dem Eingabemodus die Aktoren auf Basis eines vorgegebenen virtuellen diskreten 3D-Orientierungsraums $O$, wobei der 3D-Orientierungsraum $O$ =: $(\alpha_i, \beta_j, \gamma_k)$ mit $i = 1, 2, ..., I, j = 1, 2, ... J, k = 1, 2, ..., K$ durch vorgegebene Winkel $\alpha_i, \beta_j, \gamma_k$ definiert ist oder definierbar ist, derart angesteuert werden, dass das Strukturelement S mit einem von der aktuellen Orientierung $\vec{O}R_S$ des Strukturelements S abhängigen vorgegebenen Moment $\vec{M}_O(\vec{O}R_S)$ auf die dazu nächstliegende diskrete Orientierung des 3D-Orientierungsraum $O$ =: $(\alpha_i, \beta_j, \gamma_k)$ bewegt wird, wobei das Strukturelements S im Falle dass gilt: $|\vec{M}_{EING,S}| < |\vec{M}_O(\vec{O}R_S)|$ in dieser nächstliegenden diskreten Orientierung des 3D-Orientierungsraums $O$ verbleibt.

Der vorgegebene Orientierungsraum $O$ =: $(\alpha_i, \beta_j, \gamma_k)$ zeichnet sich dadurch aus, dass er diskrete Orientierungen, die sich beispielsweise durch vorgegebene diskrete Winkel $\alpha_i, \beta_j, \gamma_k$ oder Winkelkombinationen definieren oder definieren lassen, vorgibt. Die aktuelle Orientierung $\vec{O}R_S = \alpha, \beta, \gamma$ des Strukturelements S ist dabei typischerweise eine Orientierung zwischen den vorgegebenen diskreten Orientierungen des 3D-Orientierungsraums $O$ =: $(\alpha_i, \beta_j, \gamma_k)$.

Das Moment $\vec{M}_O(\vec{O}R_S)$ erzeugt keine Translation des Strukturelements S, sondern eine neue Orientierung des Strukturelements S. Anders ausgedrückt, bewirkt das Moment $\vec{M}_O(\vec{O}R_S)$ eine Neuorientierung aus einer beliebigen Orientierung $\vec{O}R_S = \alpha, \beta, \gamma$ des Strukturelements S auf die dazu nächstliegende diskrete Orientierung $\vec{O}N(\vec{O}R_S) = (\alpha_i, \beta_j, \gamma_k)_N$ des Orientierungsraums $O$. Die dabei zugrundeliegende Metrik, die im vorliegenden Fall die "Nähe" definiert, ist frei zu wählen und kann beispielsweise je nach Orientierungsrepräsentation variieren.

Die aktuelle Orientierung $\vec{O}R_S$ des Strukturelements S relativ zum diskreten 3D-Orientierungsraum $O$ kann beispielsweise mittels einer Sensorik zur Erfassung einer aktuellen Orientierung des Strukturelements S oder durch Auswertung von Steuerparametern zur Ansteuerung der Aktoren des Roboterelements ermittelt werden. Entsprechende Vorrichtungen und Verfahren sind dem Stand der Technik zu entnehmen.

Die aktuelle Orientierung $\vec{O}R_S$ des Strukturelements S relativ zum diskreten 3D-Orientierungsraum $O$ kann aufgrund der manuellen Bewegung des Strukturelements S durch einen Nutzer eine Orientierung sein, die zwischen den diskreten Orientierungen des 3D-Orientierungsraums $O$ liegt, sodass das Moment $\vec{M}_O(\vec{O}R_S)$ vorteilhaft zu einer quasi "gerasterten" Orientierungseingabe im Arbeitsraum führt, da immer dann, wenn die aktuelle Orientierung $\vec{O}R_S$ des Strukturelements S nicht einer diskreten Orientierung des 3D-Orientierungsraums $O$ entspricht liegt, die Aktoren der Roboterstruktur derart angesteuert werden, dass das Strukturelements S auf die dazu nächstliegende diskrete Orientierung $\vec{O}N(\vec{O}R_S)$ des 3D-Orientierungsraums $O$ =: $(\alpha_i, \beta_j, \gamma_k)$ bewegt wird bzw. hin orientiert wird.

In einer vorteilhaften Weiterbildung sind mehrere Strukturelemente $S_i$ der beweglichen Roboterstruktur und/oder entsprechend zugeordnete Punkte $P_{S,i}$ definiert, die von der Steuervorrichtung entsprechend der oben stehenden Ausführungen berücksichtigt werden. Dies ermöglicht insbesondere eine diskretisierte Eingabe von Posen und Bewegungsabläufen der gesamten beweglichen Roboterstruktur.

Insgesamt ermöglicht der vorgeschlagene Roboter im Rahmen eines "Teach-in" Vorgangs eine diskretisierte und damit akkurate Eingabe von Positionen, Translationen und/oder Drehungen des Strukturelements bzw. Posen und/oder Bewegungen des Strukturelements in einem zugeordneten Bezugssystem. Dabei wird für die "eingebende" Person (Nutzer) ein haptisches Feedback erzeugt, das vorteilhaft eine lineare oder nichtlineare Federwirkung mit je nach Bedarf einstellbarer linearer oder nichtlinearer Dämpfungswirkung zwischen dem Strukturelement S bzw. dem Punkt $P_S$ und dem nächstliegenden 3D-Gitterpunkt bzw. der nächstliegenden diskreten Orientierung $\vec{ON}(\vec{OR}_S)$ des 3D Orientierungsraums emuliert. In Abwesenheit von externen auf das Roboterelement bzw. das Strukturelement S einwirkenden Kräften oder Momenten "schnappt" der Punkt $P_S$ bzw. das Strukturelement S in den nächstliegenden 3D-Gitterpunkt bzw. in das nächstliegende 3D-Gitterpunktvolumen bzw. in die nächstliegende diskrete Orientierung $\vec{ON}(\vec{OR}_S)$ des 3D Orientierungsraums $O$.

Vorteilhaft sind die Inkremente (Schrittweiten) für die diskretisierte Eingabe von Translationen und/oder Drehungen/Orientierungen variabel vorgebbar. Mit anderen Worten sind die Gitterabstände im 3D-Gitter bzw. sind die diskreten Winkel $\alpha_i$, $\beta_j$, $\gamma_k$ des 3D Orientierungsraum $O$ vorteilhaft variabel vorgebbar.

Ein derart ausgeführter Roboter ermöglicht insbesondere eine schnelle, genaue und wiederholbare Eingabe von Positionen, Posen oder Bewegungsabläufen der beweglichen Roboterstruktur.

Vorteilhaft ist die Roboterstruktur ein Roboterarm, insbesondere ein mehrgliedriger Roboterarm. Das Strukturelement S kann grundsätzlich ein beliebiger Teil des Roboterarms sein. Vorteilhaft ist das Strukturelement S ein Endeffektor eines Roboterarms. Die Roboterstruktur kann sich verzweigende bewegliche Elemente umfassen, beispielsweise als Roboterhand ausgestaltet sein. Die Roboterstruktur kann nicht aktorisch angetriebene Strukturglieder aufweisen.

In einer Weiterbildung des vorgeschlagenen Roboters ist das Strukturelement S der Endeffektor eines Roboterarms und der Punkt $P_S$ der sogenannte "Tool-Center" Punkt TCP des Endeffektors. Der "Tool-Center" Punkt TCP kann auf dem Endeffektor oder relativ dazu definiert sein. In dieser Weiterbildung ist somit eine diskretisierte und damit akkurate Eingabe von Positionen und Translationen des "Tool-Center" Punktes TCP möglich.

Vorteilhaft variiert die vorgegebene Kraft $\vec{F}_{GRID}(POS_{PS})$ im 3D-Gitter periodisch. Die Kraft $\vec{F}_{GRID}(POS_{PS})$ greift virtuell an der Position $P_S$ des Strukturelements S an und hängt insbesondere von der aktuellen Position $POS_{PS}$ des Punktes $P_S$ im 3D-Gitter ab. Natürlich kann die vorgegebene Kraft $\vec{F}_{GRID}(POS_{PS})$ im 3D-Gitter je nach Anforderung und Anwendung auch aperiodisch oder in einer Mischform (periodisch und aperiodisch) im Arbeitsraum des Roboters vorgegeben werden.

Vorteilhaft ist ein maximaler Betrag $|\vec{F}_{GRID}|_{max}$ und/oder ein minimaler Betrag $|\vec{F}_{GRID}|_{min}$ der Kraft $\vec{F}_{GRID}(POS_{PS})$ für das gesamte 3D-Gitter oder ausgewählte Bereiche daraus vorgegeben, sodass gilt: $|\vec{F}_{GRID}|_{min} < |F_{GRID}(POS_{PS})| < |\vec{F}_{GRID}|_{max}$. Der maximale Betrag $|\vec{F}_{GRID}|_{max}$ und/oder der minimale Betrag $|\vec{F}_{GRID}|_{min}$ ist vorteilhaft über ein Eingabemittel des Roboters von dem jeweiligen Nutzer variabel vorgebbar. Vorteilhaft sind $|\vec{F}_{GRID}|_{max}$ und/oder $|\vec{F}_{GRID}|_{min}$ derart bemessen, dass versehentliche oder unmotivierte Eingaben bzw. Bewegungen des Punktes $P_S$ vermieden werden, und gleichzeitig der Betrag $|\vec{F}_{EING,PS}|$ der für eine Bewegung des Punktes $P_S$ erforderlichen Eingabekraft $\vec{F}_{EING}(P_S)$ vom Nutzer als angenehm empfunden wird, wobei eine Bewegung des Punktes $P_S$ stets erfordert: $|\vec{F}_{EING,PS}| > |\vec{F}_{GRID}(POS_{PS})|$.

Vorteilhaft sind die Gitterpunkte des 3D-Gitters und/oder die Abstände von Gitterpunkten des 3D-Gitters mittels einer Eingabevorrichtung des Roboters beispielsweise einzeln oder für Bereiche des Arbeitsraumes des Roboters variabel vorgebbar. Insbesondere können Raumbereiche des Arbeitsraumes des Roboters zur Erzielung einer höheren Auflösung in einzelnen Raumbereichen ein dichteres 3D-Gitter (d.h. mehr Gitterpunkte pro Volumeneinheit) als in anderen Bereichen aufweisen. Vorteilhaft verfügt der Roboter über eine Eingabevorrichtung mit Zugriff auf eine Speichereinheit, in der verschiedene 3D-Gitter hinterlegt sind, die über die Eingabevorrichtung auswählbar sind.

Vorteilhaft ist die Kraft $\vec{F}_{GRID}(POS_{PS})$ mittels einer Eingabevorrichtung variabel vorgebbar. Beispielsweise kann die Kraft $\vec{F}_{GRID}(POS_{PS})$ für Positionen $POS_{PS}$ innerhalb einer Einheitszelle des 3D-Gitters vorgegeben werden und auf das 3D-Gitter oder Teilbereiche des Arbeitsraumes übertragen werden.

Vorteilhaft ist die Steuervorrichtung derart ausgeführt und eingerichtet, dass im Fall, dass mindestens zwei nächstliegende Gitterpunkte oder Gitterpunktvolumen des 3D-Gitters gleich weit von der aktuellen Position $POS_{PS}$ des Punktes $P_S$ im 3D-Gitter entfernt sind, einer dieser Gitterpunkte/Gitterpunktvolumen als der/das nächstliegende Gitterpunkt/Gitterpunktvolumen nach einem vorgegeben Verfahren ausgewählt wird. Eine solche Entscheidung kann auf Basis eines Zufallsalgorithmus, d.h. statistisch erfolgen. Natürlich sind je nach Anwendung und Aufgabe unterschiedliche Auswahlalgorithmen verwendbar.

Vorteilhaft ist die Steuervorrichtung derart ausgeführt und eingerichtet, dass in dem Arbeitsraum ein virtuelles 3D-Potentialfeld definiert ist, dessen lokale Minima mit den Gitterpunkten des 3D-Gitters identisch sind, wobei die Kraft $\vec{F}_{GRID}(POS_{PS})$ sich aus dem negativen Gradienten dieses Potentialfeldes ermittelt. Das Potenzialfeld kann je nach Aufgabe und Anwendung entsprechend vorgegeben werden.

Vorteilhaft weisen die lokalen Minima des 3D-Potentialfeldes in einem vorgegebenen Raumbereich um jeden Gitterpunkt des 3D-Gitters ein konstantes Potential auf, wobei der vorgegebene Raumbereich eine größte Erstreckung aufweist, die kleiner als der Gitterabstand zwischen zwei benachbarten Gitterpunkten des 3D-Gitters ist.

Vorteilhaft ist ein maximaler Betrag $|\vec{M}_O|_{max}$ und/oder ein minimaler Betrag $|\vec{M}_O|_{min}$ des vorgegebenen Moments $\vec{M}_O(\vec{OR}_S)$ für den 3D Orientierungsraum $O$ oder ausgewählte Bereiche daraus vorgegeben, sodass gilt: $|\vec{M}_O|_{min} < |\vec{M}_O(\vec{OR}_S)| < |\vec{M}_O|_{max}$. Der maximale Betrag $|\vec{M}_O|_{max}$ und/oder der minimale Betrag $|\vec{M}_O|_{min}$ des Moments $\vec{M}_O(OR_S)$ ist vorteilhaft über ein Eingabemittel des Roboters von dem jeweiligen Nutzer variabel vorgebbar. Vorteilhaft sind $|\vec{M}_O|_{max}$ und/oder $||\vec{M}_O|_{min}|$ derart bemessen, dass versehentliche oder unmotivierte Neuorientierungen des Strukturelements S vermieden werden, und gleichzeitig der Betrag $|\vec{M}_{EING}(\vec{OR}_S)|$ der für eine Neuorientierung des Strukturelements S erforderlichen Momentes $\vec{M}_{EING}(\vec{OR}_S)$ vom Nutzer als angenehm empfunden wird, wobei eine Neuorientierung des Strukturelements S stets erfordert: $|\vec{M}_{EING}(\vec{OR}_S)| > |\vec{M}_O(\vec{OR}_S)|$.

In einer Weiterbildung des Roboters ist der Orientierungsraum $O =: (\alpha_i, \beta_j, \gamma_k)$ abhängig von der aktuellen Position $POS_{PS}$ des Punktes $P_S$ definiert:

$$O = O(POS_{PS}) = (\alpha_i(POS_{PS}), \beta_j(POS_{PS}), \gamma_k(POS_{PS})).$$

Dies ermöglicht, abhängig von der Position $POS_{PS}$ des Punktes $P_S$ im Arbeitsraum unterschiedliche diskrete Orientierungsräume vorzugeben.

Vorteilhaft umfasst der Roboter eine Eingabevorrichtung, mittels der Abstände der Gitterpunkte des 3D-Gitters variabel vorgebbar sind.

Vorteilhaft umfasst der Roboter eine Eingabevorrichtung, mittels der diskrete Winkel $\alpha_i, \beta_j, \gamma_k$ des Orientierungsraums $O$ variabel vorgebbar sind.

Vorteilhaft ist die Steuervorrichtung derart ausgeführt und eingerichtet, dass im Fall, dass mindestens zwei nächstliegende Orientierungen $O =: (\alpha_i, \beta_j, \gamma_k)$ gleiche Unterschiede zu der aktuellen der aktuellen Orientierung $\vec{OR}_S$ des Strukturelements S aufweisen, eine dieser Orientierungen $O =: (\alpha_i, \beta_j, \gamma_k)$ nach einem vorgegeben Verfahren ausgewählt wird.

Ein weiterer Aspekt der Erfindung betrifft ein Verfahren zur Steuerung eines Roboters, der eine bewegliche, mehrgliedrige, mittels Aktoren antreibbare Roboterstruktur aufweist, wobei an der beweglichen Roboterstruktur zumindest ein ausgezeichnetes Strukturelement S mit zumindest einem auf dem Strukturelement S ausgezeichneten Punkt $P_S$ definiert ist, und der Roboter in einem Eingabemodus Positionen $POS_{PS}$ des Punktes $P_S$ und/oder Posen des Strukturelements S in einem Arbeitsraum des Roboters lernt, wobei der Nutzer zur Bewegung der Strukturelements S auf die bewegliche Roboterstruktur eine Eingabekraft $\vec{F}_{EING}$ ausübt, die sich dem Punkt $P_S$ als $\vec{F}_{EING,PS}$ vermittelt und/oder die sich dem Strukturelement S als Moment $\vec{M}_{EING,S}$ vermittelt.

In dem vorgeschlagenen Verfahren werden die Aktoren in dem Eingabemodus auf Basis eines vorgegebenen, den Arbeitsraum zumindest teilweise ausfüllenden, virtuellen 3D-Gitters derart angesteuert, dass das Strukturelement S mit einer, von der aktuellen Position $POS_{PS}$ des Punktes $P_S$ im 3D-Gitter abhängigen vorgegebenen Kraft $\vec{F}_{GRID}(POS_{PS})$ auf den dazu nächstliegenden Gitterpunkt des 3D-Gitters, oder in ein um den dazu nächstliegenden Gitterpunkt des 3D-Gitters definiertes Gitterpunktvolumen bewegt wird, wobei der Punkt $P_S$ des Strukturelements S im Falle dass gilt: $|\vec{F}_{EING,PS}| < |\vec{F}_{GRID}(POS_{PS})|$ an diesem nächstliegenden Gitterpunkt oder in diesem Gitterpunktvolumen verbleibt.

Alternativ oder zusätzlich werden die Aktoren in dem Eingabemodus auf Basis eines vorgegebenen virtuellen diskreten 3D-Orientierungsraums $O$, wobei der 3D-Orientierungsraum $O =: (\alpha_i, \beta_j, \gamma_k)$ mit $i = 1, 2, ..., I, j = 1, 2, ... J, k = 1, 2, ..., K$ durch vorgegebene Winkel $\alpha_i, \beta_j, \gamma_k$ definiert ist oder definierbar ist, derart angesteuert, dass das Strukturelement S mit einer von der aktuellen Orientierung $\vec{OR}_S$ des Strukturelements S abhängigen vorgegebenen Moment $\vec{M}_O(\vec{OR}_S)$ auf die dazu nächstliegende diskrete Orientierung des 3D-Orientierungsraums $O =: (\alpha_i, \beta_j, \gamma_k)$ bewegt wird, wobei das Strukturelement S im Falle dass gilt: $|\vec{M}_{EING,S}| < \vec{M}_O(\vec{OR}_S)$ in dieser nächstliegenden diskreten Orientierung des 3D-Orientierungsraums $O$ verbleibt.

Bei dem vorgeschlagenen Verfahren ist vorteilhaft in dem Arbeitsraum ein virtuelles 3D-Potentialfeld definiert, dessen lokale Minima mit den Gitterpunkten des 3D-Gitters identisch sind, wobei die Kraft $\vec{F}_{GRID}(POS_{PS})$ aus dem negativen Gradienten dieses Potentialfeldes ermittelt wird.

In einer Weiterbildung des Verfahrens weisen die lokalen Minima des 3D-Potentialfeldes in einem vorgegebenen Raumbereich um jeden Gitterpunkt des 3D-Gitters ein konstantes Potential auf, wobei der Raumbereich eine größte Erstreckung aufweist, die kleiner als der Gitterabstand zwischen zwei benachbarten Gitterpunkten ist.

In einer Weiterbildung des Verfahrens wird im Fall, dass mindestens zwei nächstliegende Orientierungen $O =:$ ($\alpha_i$, $\beta_j$, $\gamma_k$) gleiche Unterschiede zu der aktuellen Orientierung $OR_S$ des Strukturelements S aufweisen, eine dieser Orientierungen $O =:$ ($\alpha_i$, $\beta_j$, $\gamma_k$) nach einem vorgegeben Verfahren ausgewählt.

Weiterbildungen des vorgeschlagenen Verfahrens und sich daraus ergebende Vorteile ergeben sich durch eine analoge und sinngemäße Übertragung der vorstehend zum vorgeschlagenen Roboter gemachten Ausführungen.

Ein weiterer Aspekt der Erfindung betrifft eine Robotersteuerung, wobei die Robotersteuerung derart ausgestaltet ist, dass ein Verfahren, wie vorstehend beschrieben, auf einer Datenverarbeitungsvorrichtung ausgeführt wird.

Ein weiterer Aspekt der Erfindung betrifft ein Computersystem mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Ein weiterer Aspekt der Erfindung betrifft eine Regelvorrichtung zur Ansteuerung eines Roboters, der eine bewegliche, mehrgliedrige mittels Aktoren antreibbare Roboterstruktur aufweist, wobei an der beweglichen Roboterstruktur zumindest ein ausgezeichnetes Strukturelement S mit zumindest einem auf dem Strukturelement S ausgezeichneten Punkt $P_S$ definiert ist, der Roboter derart ausgelegt und eingerichtet ist, dass der Roboter in einem Eingabemodus Positionen $POS_{PS}$ des Punktes $P_S$ und/oder Posen des Strukturelements S in einem Arbeitsraum des Roboters lernt, wobei der Nutzer zur Bewegung des Strukturelements S auf die bewegliche Roboterstruktur eine Eingabekraft $\vec{F}_{EING}$ ausübt, die sich dem Punkt $P_S$ als $\vec{F}_{EING,PS}$ vermittelt und/oder die sich dem Strukturelement S als Moment $\vec{M}_{EING,S}$ vermittelt.

Die Regelvorrichtung umfasst eine Steuervorrichtung, die derart ausgeführt und eingerichtet ist, dass in dem Eingabemodus die Aktoren auf Basis eines vorgegebenen, den Arbeitsraum zumindest teilweise ausfüllenden, virtuellen 3D-Gitters derart angesteuert werden, dass das Strukturelement S mit einer, von der aktuellen Position $POS_{PS}$ des Punktes $P_S$ im 3D-Gitter abhängigen vorgegebenen Kraft $\vec{F}_{GRID}(POS_{PS})$ auf den dazu nächstliegenden Gitterpunkt des 3D-Gitters oder in ein um den dazu nächstliegenden Gitterpunkt des 3D-Gitters definiertes Gitterpunktvolumen bewegt wird, wobei der Punkt $P_S$ des Strukturelements S im Falle dass gilt: $|\vec{F}_{EING,PS}| < |\vec{F}_{GRID}(POS_{PS})|$ an diesem nächstliegenden Gitterpunkt oder in diesem Gitterpunktvolumen verbleibt, und/oder in dem Eingabemodus die Aktoren auf Basis eines vorgegebenen virtuellen diskreten 3D-Orientierungsraums $O$, wobei der 3D-Orientierungsraum $O =:$ ($\alpha_i$, $\beta_j$, $\gamma_k$) mit $i = 1, 2, ..., I, j = 1, 2, ... J, k = 1, 2, ..., K$ durch vorgegebene Winkel $\alpha_i$, $\beta_j$, $\gamma_k$ definiert ist oder definierbar ist, derart angesteuert werden, dass das Strukturelement S mit einem von der aktuellen Orientierung $\vec{O}R_S$ des Strukturelements S abhängigen vorgegebenen Moment $\vec{M}_O(\vec{O}R_S)$ auf die dazu nächstliegende diskrete Orientierung des 3D-Orientierungsraum $O =:$ ($\alpha_i$, $\beta_j$, $\gamma_k$) bewegt wird, wobei das Strukturelements S im Falle dass gilt: $|\vec{M}_{EING,S}| < |\vec{M}_O(\vec{O}R_S)|$ in dieser nächstliegenden diskreten Orientierung des 3D-Orientierungsraums $O$ verbleibt.

Weiterbildungen der vorgeschlagenen Regelvorrichtung und sich daraus ergebende Vorteile ergeben sich durch eine analoge und sinngemäße Übertragung der vorstehenden Ausführungen.

Die Erfindung betrifft weiterhin ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Die Erfindung betrifft weiterhin ein Computer-Programm-Produkt mit auf einem maschinenlesbaren Träger gespeichertem Programmcode zur Durchführung des Verfahrens, wie vorstehend beschrieben, wenn der Programmcode auf einer Datenverarbeitungsvorrichtung ausgeführt wird.

Schließlich betrifft die Erfindung ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

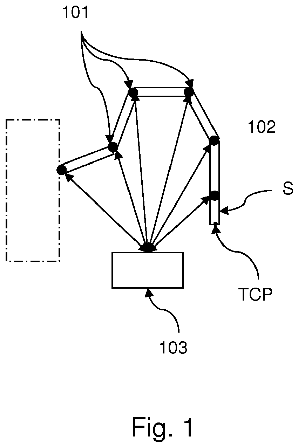

Fig. 1    eine schematisierte Darstellung eines vorgeschlagenen Roboters.

**Fig. 1** zeigt eine schematisierte Darstellung eines vorgeschlagenen Roboters, aufweisend eine bewegliche, mehrgliedrige, mittels Aktoren 101 antreibbare Roboterstruktur 102, wobei an der beweglichen Roboterstruktur 102 zumindest ein ausgezeichnetes Strukturelement S mit zumindest einem auf dem Strukturelement S ausgezeichneten Punkt $P_S$ definiert ist. Die Roboterstruktur 102 ist an einem Roboterkörper (gestrichelte Box) angebracht.

Die Roboterstruktur 102 ist vorliegend ein fünfgliedriger Roboterarm 102 an dessen distalem Ende ein Effektor S angeordnet ist. Der Effektor S ist vorliegend das Strukturelement S. An dem Effektor S ist ein sogenannter "Tool Center Point" = TCP definiert, der mit dem ausgezeichneten Punkt $P_S = P_{TCP}$ identisch ist.

Der Roboter ist derart ausgelegt und eingerichtet, dass der Roboter in einem Eingabemodus Positionen $POS_{TCP}$ des TCP und/oder Posen des Effektors S in einem Arbeitsraum des Roboters lernen kann, wobei der Nutzer zur Bewegung der Effektors S auf den Roboterarm eine Eingabekraft $\vec{F}_{EING}$ ausübt, die sich dem Punkt $P_{TCP}$ als $\vec{F}_{EING,TCP}$ vermittelt und/oder die sich dem Effektor als Moment $\vec{M}_{EING,S}$ vermittelt.

Der Roboter umfasst weiterhin eine Steuervorrichtung, die derart ausgeführt und eingerichtet ist, dass in dem Eingabemodus die Aktoren 101 auf Basis eines vorgegebenen, den Arbeitsraum zumindest teilweise ausfüllenden, raumfesten virtuellen 3D-Gitters derart angesteuert werden, dass der Effektor S mit einer, von der aktuellen Position $POS_{TCP}$ des Tool Center Points TCP im 3D-Gitter abhängigen vorgegebenen Kraft $\vec{F}_{GRID}(POS_{TCP})$ auf den dazu nächstliegenden Gitterpunkt des 3D-Gitters bewegt wird, wobei der Punkt $P_{TCP}$ des Strukturelements S im Falle dass gilt: $|\vec{F}_{EING,TCP}| < |\vec{F}_{GRID}(POS_{TCP})|$ an diesem nächstliegenden Gitterpunkt verbleibt.

Weiterhin ist die Steuervorrichtung derart ausgeführt und eingerichtet, dass in dem Eingabemodus die Aktoren auf Basis eines vorgegebenen virtuellen diskreten 3D-Orientierungsraums *O*, wobei der 3D-Orientierungsraum *O* =: ($\alpha_i$, $\beta_j$, $\gamma_k$) mit *i* = 1, 2, ..., *I*, *j* = 1, 2, ... *J*, *k* = 1, 2, ..., *K* durch vorgegebene Winkel $\alpha_i$, $\beta_j$, $\gamma_k$ definiert ist, derart angesteuert werden, dass der Effektor S mit einem von der aktuellen Orientierung $\vec{OR}_S$ des Effektors S abhängigen vorgegebenen Moment $\vec{M}_O(\vec{OR}_S)$ auf die dazu nächstliegende diskrete Orientierung des 3D-Orientierungsraum *O* =: ($\alpha_i$, $\beta_j$, $\gamma_k$) bewegt wird, wobei das Strukturelement S im Falle dass gilt: $|\vec{M}_{EING,S}| < |\vec{M}_O(\vec{OR}_S)|$ in dieser nächstliegenden diskreten Orientierung des 3D-Orientierungsraums *O* verbleibt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

Bezugszeichenliste

101 Aktoren
102 bewegliche, mehrgliedrige Roboterstruktur
103 Steuervorrichtung

**Patentansprüche**

1. Roboter aufweisend eine bewegliche, mehrgliedrige, mittels Aktoren (101) antreibbare Roboterstruktur (102) und eine Steuervorrichtung (103), wobei

   - an der beweglichen Roboterstruktur (102) zumindest ein ausgezeichnetes Strukturelement S mit zumindest einem auf dem Strukturelement S ausgezeichneten Punkt $P_S$ definiert ist,
   - der Roboter derart ausgelegt und eingerichtet ist, dass der Roboter in einem Eingabemodus Positionen $POS_{PS}$ des Punktes $P_S$ und/oder Posen des Strukturelements S in einem Arbeitsraum des Roboters lernt, wobei der Nutzer zur Bewegung des Strukturelements S auf die bewegliche Roboterstruktur eine Eingabekraft $\vec{F}_{EING}$ ausübt, die sich dem Punkt $P_S$ als $\vec{F}_{EING,PS}$ vermittelt und/oder die sich dem Strukturelement S als Moment $\vec{M}_{EING,S}$ vermittelt, und
   - die Steuervorrichtung (103) des Roboters derart ausgeführt und eingerichtet ist, dass

○ in dem Eingabemodus die Aktoren (101) auf Basis eines vorgegebenen, den Arbeitsraum zumindest teilweise ausfüllenden, virtuellen 3D-Gitters derart angesteuert werden, dass das Strukturelement S mit einer, von der aktuellen Position $POS_{PS}$ des Punktes $P_S$ im 3D-Gitter abhängigen vorgegebenen Kraft $\vec{F}_{GRID}(POS_{PS})$ auf den dazu nächstliegenden Gitterpunkt des 3D-Gitters oder in ein um den dazu nächstliegenden Gitterpunkt des 3D-Gitters definiertes Gitterpunktvolumen bewegt wird, wobei der Punkt $P_S$ des Strukturelements S im Falle dass gilt: $|\vec{F}_{EING,PS}| < |\vec{F}_{GRID}(POS_{PS})|$ an diesem nächstliegenden Gitterpunkt oder in diesem Gitterpunktvolumen verbleibt, und/oder

○ in dem Eingabemodus die Aktoren (101) auf Basis eines vorgegebenen virtuellen diskreten 3D-Orientierungsraums $O$, wobei der 3D-Orientierungsraum $O =: (\alpha_i, \beta_j, \gamma_k)$ mit $i = 1, 2, ..., I, j = 1, 2, ... J, k = 1, 2, ..., K$ durch vorgegebene Winkel $\alpha_i, \beta_j, \gamma_k$ definiert ist oder definierbar ist, derart angesteuert werden, dass das Strukturelement S mit einem von der aktuellen Orientierung $\vec{OR}_S$ des Strukturelements S abhängigen vorgegebenen Moment $\vec{M}_O(\vec{OR}_S)$ auf die dazu nächstliegende diskrete Orientierung des 3D-Orientierungsraums $O =: (\alpha_i, \beta_j, \gamma_k)$ bewegt wird, wobei das Strukturelement S im Falle dass gilt: $|\vec{M}_{EING,S}| < |\vec{M}_O(\vec{OR}_S)|$ in dieser nächstliegenden diskreten Orientierung des 3D-Orientierungsraums $O$ verbleibt.

2. Roboter nach Anspruch 1,
   bei dem die vorgegebene Kraft $\vec{F}_{GRID}(POS_{PS})$ im 3D-Gitter periodisch variiert.

3. Roboter nach einem der Ansprüche 1 bis 2,
   bei dem die Steuervorrichtung (103) derart ausgeführt und eingerichtet ist, dass im Fall, dass mindestens zwei nächstliegende Gitterpunkte oder Gitterpunktvolumen gleich weit von der aktuellen Position $POS_{PS}$ des Punktes $P_S$ entfernt sind, einer dieser Gitterpunkte/Gitterpunktvolumen als der/das nächstliegende Gitterpunkt/Gitterpunktvolumen nach einem vorgegeben Verfahren ausgewählt wird.

4. Roboter nach dem Ansprüche 1 bis 3,
   bei dem die Steuervorrichtung (103) derart ausgeführt und eingerichtet ist, dass in dem Arbeitsraum ein virtuelles 3D-Potentialfeld definiert ist, dessen lokale Minima mit den Gitterpunkten des 3D-Gitters identisch sind, wobei die Kraft $\vec{F}_{GRID}(POS_{PS})$ sich aus dem negativen Gradienten dieses Potentialfeldes ermittelt.

5. Roboter nach einem der Ansprüche 1 bis 4,
   bei dem die Steuervorrichtung (103) derart ausgeführt und eingerichtet ist, dass im Fall, dass mindestens zwei nächstliegende Orientierungen $O =: (\alpha_i, \beta_j, \gamma_k)$ gleiche Unterschiede zu der aktuellen Orientierung $\vec{OR}_S$ des Strukturelements S aufweisen, eine dieser Orientierungen $O =: (\alpha_i, \beta_j, \gamma_k)$ nach einem vorgegeben Verfahren ausgewählt wird.

6. Roboter nach einem der Ansprüche 1 bis 5,
   bei dem der Orientierungsraum $O =: (\alpha_i, \beta_j, \gamma_k)$ abhängig von der aktuellen Position $POS_{PS}$ des Punktes $P_S$ definiert ist: $O = O(POS_{PS}) = (\alpha_i(POS_{PS}), \beta_j(POS_{PS}), \gamma_k(POS_{PS}))$.

7. Verfahren zur Steuerung eines Roboters, der eine bewegliche, mehrgliedrige, mittels Aktoren (101) antreibbare Roboterstruktur (102) aufweist, mit folgenden Schritten:

   - an der beweglichen Roboterstruktur (102) zumindest ein ausgezeichnetes Strukturelement S mit zumindest einem auf dem Strukturelement S ausgezeichneten Punkt $P_S$ definieren,
   - Erlernen durch den Roboter in einem Eingabemodus von Positionen $POS_{PS}$ des Punktes $P_S$ und/oder Posen des Strukturelements S in einem Arbeitsraum des Roboters, wobei der Nutzer zur Bewegung des Strukturelements S auf die bewegliche Roboterstruktur (102) eine Eingabekraft $\vec{F}_{EING}$ ausübt, die sich dem Punkt $P_S$ als $\vec{F}_{EING,PS}$ vermittelt und/oder die sich dem Strukturelement S als Moment $\vec{M}_{EING,S}$ vermittelt, und
   - Ansteuern der Aktoren (101) in dem Eingabemodus durch eine Steuervorrichtung (103)

     ○ auf Basis eines vorgegebenen, den Arbeitsraum zumindest teilweise ausfüllenden, virtuellen 3D-Gitters derart , dass das Strukturelement S mit einer, von der aktuellen Position $POS_{PS}$ des Punktes $P_S$ im 3D-Gitter abhängigen vorgegebenen Kraft $\vec{F}_{GRID}(POS_{PS})$ auf den dazu nächstliegenden Gitterpunkt des 3D-Gitters, oder in ein um den dazu nächstliegenden Gitterpunkt des 3D-Gitters definiertes Gitterpunktvolumen bewegt wird, wobei der Punkt $P_S$ des Strukturelements S im Falle dass gilt: $|\vec{F}_{EING,PS}| < |\vec{F}_{GRID}(POS_{PS})|$

an diesem nächstliegenden Gitterpunkt oder in diesem Gitterpunktvolumen verbleibt, und/oder

◦ auf Basis eines vorgegebenen virtuellen diskreten 3D-Orientierungsraums $O$, wobei der 3D-Orientierungsraum $O$ =: $(\alpha_i, \beta_j, \gamma_k)$ mit i = 1, 2, ..., I, j = 1, 2, ... J, k = 1, 2, ..., K durch vorgegebene Winkel $\alpha_i, \beta_j, \gamma_k$ definiert ist oder definierbar ist, derart, dass das Strukturelement S mit einem von der aktuellen Orientierung $\vec{O}R_S$ des Strukturelements S abhängigen vorgegebenen Moment $\vec{M}_O(\vec{O}R_S)$ auf die dazu nächstliegende diskrete Orientierung des 3D-Orientierungsraums $O$ =: $(\alpha_i, \beta_j, \gamma_k)$ bewegt wird, wobei das Strukturelement S im Falle dass gilt: $|\vec{M}_{EING,S}| < \vec{M}_O(\vec{O}R_S)$ in dieser nächstliegenden diskreten Orientierung des 3D-Orientierungsraums $O$ verbleibt.

8. Verfahren nach Anspruch 7,
bei dem in dem Arbeitsraum ein virtuelles 3D-Potentialfeld definiert ist, dessen lokale Minima mit den Gitterpunkten des 3D-Gitters identisch sind, wobei die Kraft $\vec{F}_{GRID}(POS_{PS})$ aus dem negativen Gradienten dieses Potentialfeldes ermittelt wird.

9. Verfahren nach Anspruch 8,
bei dem die lokalen Minima des 3D-Potentialfeldes in einem vorgegebenen Raumbereich um jeden Gitterpunkt des 3D-Gitters ein konstantes Potential aufweisen, wobei der Raumbereich eine größte Erstreckung aufweist, die kleiner als der Gitterabstand zwischen zwei benachbarten Gitterpunkten ist.

10. Verfahren nach einem der Ansprüche 7 bis 9,
bei dem im Fall, dass mindestens zwei nächstliegende Orientierungen $O$ =: $(\alpha_i, \beta_j, \gamma_k)$ gleiche Unterschiede zu der aktuellen Orientierung $OR_S$ des Strukturelements S aufweisen, eine dieser Orientierungen $O$ =: $(\alpha_i, \beta_j, \gamma_k)$ nach einem vorgegeben Verfahren ausgewählt wird.

## Claims

1. Robots comprising a moveable, multi-element robotic structure (102) which can be operated by means of actuators (101) and a control device (103), wherein

   - at least one marked structural element S is defined on the moveable robotic structure (102) with at least one point $P_s$ marked on the structural element S,
   - the robot is designed and set up in such a way that, in an input mode, the robot learns positions $POS_{PS}$ of the point $P_S$ and/or postures of the structural element S in a working area of the robot, wherein the user exerts an input force $\vec{F}_{EING}$ to move the robot structure S onto the moveable robot structure, which conveys itself to the point $P_S$ as $\vec{F}_{EING,PS}$ and/or which conveys itself to the structural element S as a torque $\dot{M}_{EING,S}$, and
   - the control device (103) of the robot is designed and set up in such a way that

      ◦ in the input mode, the actuators (101) are controlled in such a way based on a predetermined virtual 3D grid at least partially filling the working area that the structural element S is moved to the next closest grid point of the 3D grid or into a grid point volume defined around the next closest grid point of the 3D grid by means of a predetermined force $\vec{F}_{GRID}(POS_{PS})$ depending on the current position $POS_{PS}$ of the point $P_S$ in the 3D grid, wherein the point $P_S$ of the structure element S remains at this closest grid point or in this grid point volume in the event the following applies: $|\vec{F}_{EING,PS}| < |\vec{F}_{GRID}(POS_{PS})|$, and/or
      ◦ in the input mode, the actuators (101) are controlled based on a predetermined virtual discrete 3D orientation space O in such a way, wherein the 3D orientation space O =: $(\alpha_i, \beta_j, \gamma_k)$ with i = 1, 2,..., I, j = 1, 2,... J, k = 1, 2,..., K is defined or definable by predetermined angles $\alpha_i, \beta_j, \gamma_k$, that the structural element S is moved onto the next closest discrete orientation of the 3D orientation space O =: $(\alpha_i, \beta_j, \gamma_k)$ by means of a predetermined torque $\dot{M}_O(\acute{O}R_S)$ depending on the current orientation $\acute{O}R_S$ of the structural element S, wherein the structural element S stays in this next closest discrete orientation of the 3D orientation space O in the case the following applies: $|\dot{M}_{EING,S}| < |\dot{M}_O(\acute{O}R_S)|$.

2. Robot according to Claim 1,
where the predetermined force $\vec{F}_{GRID}(POS_{PS})$ periodically varies in the 3D grid.

3. Robot according to one of the Claims 1 to 2,
in which the control device (103) is designed and set up in such a way that, in the event that at least two next closest grid points or grid point volumes are equally spaced away from the current position $POS_{PS}$ of the point $P_S$, one of these grid points/grid point volumes is selected as the next closest grid point/grid point volume in accordance with a predetermined method.

4. Robot according to one of the Claims 1 to 3,
   in which the control device (103) is designed and set up in such a way that a virtual 3D potential field is defined in the working area, the local minima of which are identical to the grid points of the 3D grid, wherein the force $\acute{F}_{GRID}(POS_{PS})$ is determined from the negative gradient of this potential field.

5. Robot according to one of the Claims 1 to 4,
   in which the control device (103) is designed and set up in such a way that, in the event that at least two next closest orientations O =: $(\alpha_i, \beta_j, \gamma_k)$ have the same differences to the current orientation $\acute{O}R_S$ of the structural element S, one of these orientations O =: $(\alpha_i, \beta_j, \gamma_k)$ is selected in accordance with a predetermined method.

6. Robot according to one of the Claims 1 to 5,
   in which the orientation space O =: $(\alpha_i, \beta_j, \gamma_k)$ is defined depending on the current position $POS_{PS}$ of the point $P_S$: O = O($POS_{PS}$)= $(\alpha_i(POS_{PS}), \beta_j(POS_{PS}), \gamma_k(POS_{PS}))$.

7. Method for controlling a robot that comprises a moveable, multi-element robot structure (102) that can be operated by means of actuators (101), with the following steps:

   - defining at least one marked structural element S on the moveable robot structure (102) with at least one point $P_S$ marked on the structural element S,
   - learning by the robot in an input mode of positions $POS_{PS}$ of the point $P_S$ and/or postures of the structural element S in a working area of the robot, wherein the user exerts an input force $\acute{F}_{EING}$ to move the structural element S onto the moveable robot structure (102), which input force $F_{EING}$ conveys itself to the point $P_S$ as $\acute{F}_{EING,PS}$ and/or which conveys itself to the structural element S as a torque $M_{EING,S}$, and
   - controlling the actuators (101) in the input mode by means of a control device (103)

     ◦ on the basis of a predetermined virtual 3D grid that fills the working space at least partially in such a way that the structural element S is moved by means of a predetermined force $\acute{F}_{GRID}(POS_{PS})$ depending on the current position $POS_{PS}$ of the point $P_S$ in the 3D grid to the next closest grid point of the 3D grid, or into a grid point volume defined around the nearest grid point of the 3D grid, wherein the point $P_S$ of the structural element S remains at this next closest grid point or in this grid point volume in the event the following applies: $|\acute{F}_{EING,PS}| < |F_{GRID}(POS_{PS})|$, and/or
     ◦ based on a predetermined virtual discrete 3D orientation space O, wherein the 3D orientation space O =: $(\alpha_i, \beta_j, \gamma_k)$ with i = 1, 2,..., I, j = 1, 2,... J, k = 1, 2,..., K is defined or definable by predetermined angles $\alpha_i$, $\beta_j$, $\gamma_k$, in such a way that the structural element S is moved to the next closest discrete orientation of the 3D orientation space O =: $(\alpha_i, \beta_j, \gamma_k)$ by means of a predetermined torque $M_O(\acute{O}R_S)$ depending on the current orientation $\acute{O}R_S$ of the structural element S, wherein the structural element S remains in this next closest discrete orientation of the 3D orientation space O in the event the following applies: $|\acute{M}_{EING,S}| < |\acute{M}_O(\acute{O}R_S)|$.

8. Method according to Claim 7,
   where a virtual 3D potential field is defined in the working area, the local minima of which are identical to the grid points of the 3D grid, where the force $\acute{F}_{GRID}(POS_{PS})$ is determined from the negative gradient of this potential field.

9. Method according to Claim 8,
   where the local minima of the 3D potential field in a predetermined space area around each grid point of the 3D grid have a constant potential, wherein the space area has a greatest extension, which is smaller than the grid spacing between two adjacent grid points.

10. Method according to one of the Claims 7 to 9,
    where, in the case that at least two next closest orientations O =: $(\alpha_i, \beta_j, \gamma_k)$ have the same differences to the current orientation of $OR_s$ of the structural element S, one of these orientations O =: $(\alpha_i, \beta_j, \gamma_k)$ is selected according to a predetermined method.

**Revendications**

1. Robot comportant une structure de robot (102) mobile, à plusieurs éléments, pouvant être entraînée au moyen d'actionneurs (101) et un dispositif de commande (103), sachant

   - que sur la structure de robot mobile (102), au moins un élément structural caractérisé S est défini avec au moins un point $P_S$ caractérisé sur l'élément structural S,
   - que le robot est conçu et agencé de telle manière que le robot apprend dans un mode d'entrée les positions $POS_{PS}$ du point $P_S$ et/ou des poses de l'élément structural S dans un espace de travail du robot, sachant que l'utilisateur exerce une force d'introduction $\dot{F}_{EING}$ pour déplacer l'élément structural S sur la structure de robot mobile, qui se transmet au point $P_S$ sous la forme $\dot{F}_{EING,PS}$ et/ou se transmet à l'élément structural S en tant que couple $\dot{M}_{EING,S}$, et
   - le dispositif de commande (103) du robot est exécuté et agencé de telle manière que

     ◦ dans le mode d'entrée, les actionneurs (101) sont commandés sur la base d'un réseau tridimensionnel virtuel prédéfini remplissant au moins en partie l'espace de travail de telle manière que l'élément structural S est déplacé avec une force $\dot{F}_{GRID}(POS_{PS})$ prédéfinie en fonction de la position actuelle $POS_{PS}$ du point $P_S$ dans le réseau tridimensionnel au point réticulaire le plus proche à cet effet du réseau tridimensionnel ou dans un volume de points réticulaires défini autour du point réticulaire le plus proche à cet effet du réseau tridimensionnel, sachant qu'au cas où le point $P_S$ de l'élément structural S vaut : $|F_{EING,PS}| < |F_{GRID}(POS_{PS})|$ reste sur ce point réticulaire le plus proche ou dans ce volume de points réticulaires et/ou
     ◦ dans le mode d'entrée, les actionneurs (101) sont commandés sur la base d'un espace d'orientation tridimensionnel virtuel discret prédéfini O, sachant que l'espace d'orientation tridimensionnel O = : ($\alpha_i$, $\beta_j$, $\gamma_k$) est défini ou peut être défini avec i = 1, 2,..., I, j = 1,2,...J, k = 1,2...,k par un angle $\alpha_i$, $\beta_j$, $\gamma_k$ prédéfini, de telle manière que l'élément structural S est déplacé avec un couple $M_O(\acute{O}R_S)$ prédéfini en fonction de l'orientation actuelle $\acute{O}R_S$ de l'élément structural S à l'orientation discrète la plus proche à cet effet de l'espace d'orientation tridimensionnel O = : ($\alpha_i$, $\beta_j$, $\gamma_k$), sachant qu'au cas où l'élément structural S vaut : $|\dot{M}_{EING,S}| < |\dot{M}_O(\acute{O}R_S)|$ reste dans cette orientation discrète la plus proche de l'espace d'orientation tridimensionnel O.

2. Robot selon la revendication 1, pour lequel la force prédéfinie $\dot{F}_{GRID}(POS_{PS})$ varie périodiquement dans un réseau tridimensionnel.

3. Robot selon l'une quelconque des revendications 1 à 2, pour lequel le dispositif de commande (103) est exécuté et agencé de telle manière qu'au cas où au moins deux points réticulaires ou volumes de points réticulaires les plus proches sont éloignés à la même distance de la position actuelle $POS_{PS}$ du point $P_S$, un de ces points réticulaires/volumes de points réticulaires les plus proches est sélectionné en tant que le/les point(s) réticulaire(s) le/les plus proche(s) selon un procédé prédéfini.

4. Robot selon l'une quelconque des revendications 1 à 3, pour lequel le dispositif de commande (103) est exécuté et agencé de telle manière que dans l'espace de travail un champ potentiel tridimensionnel est défini dont les minima locaux sont identiques aux points réticulaires du réseau tridimensionnel, sachant que la force $\dot{F}_{GRID}(POS_{PS})$ est déterminée à partir des gradients négatifs de ce champ potentiel.

5. Robot selon l'une quelconque des revendications 1 à 4, pour lequel le dispositif de commande (103) est exécuté et agencé de telle manière qu'au cas où au moins deux orientations les plus proches O = : ($\alpha_i$, $\beta_j$, $\gamma_k$) comportent des différences identiques par rapport à l'orientation actuelle $\acute{O}R_S$ de l'élément structural S, une de ces orientations O = : ($\alpha_i$, $\beta_j$, $\gamma_k$) est sélectionnée selon un procédé prédéfini.

6. Robot selon l'une quelconque des revendications 1 à 5, pour lequel l'espace d'orientation O = : ($\alpha_i$, $\beta_j$, $\gamma_k$) est défini en fonction de la position actuelle $POS_{PS}$ du point $P_S$: O = O($POS_{PS}$) = ($\alpha_i(POS_{PS})$, $\beta_j(POS_{PS})$, $\gamma_k(POS_{PS})$).

7. Procédé de commande d'un robot, qui comporte une structure de robot (102) mobile, à plusieurs éléments, pouvant être entraînée au moyen d'actionneurs (101) avec les étapes suivantes :

   - définition sur la structure de robot mobile (102) d'au moins un élément structural caractérisé S avec au moins un point $P_S$ caractérisé sur l'élément structural S,

- apprentissage par le robot dans un mode d'entrée de positions $POS_{PS}$ du point $P_S$ et/ou de poses de l'élément structural S dans un espace de travail du robot, sachant que l'utilisateur exerce une force d'introduction $\vec{F}_{EING}$ pour déplacer l'élément structural S sur la structure de robot mobile (102), qui se transmet au point $P_S$ sous la forme $\vec{F}_{EING,PS}$ et/ou se transmet à l'élément structural S en tant que couple $\vec{M}_{EING,S}$, et

- commande des actionneurs (101) dans un mode d'entrée par un dispositif de commande (103)

  ◦ sur la base d'un réseau tridimensionnel virtuel prédéfini remplissant au moins en partie l'espace de travail de telle manière que l'élément structural S est déplacé avec une force $\vec{F}_{GRID}(POS_{PS})$ prédéfinie en fonction de la position actuelle $POS_{PS}$ du point $P_S$ dans le réseau tridimensionnel au point réticulaire le plus proche à cet effet du réseau tridimensionnel ou dans un volume de points réticulaires défini autour du point réticulaire le plus proche à cet effet du réseau tridimensionnel, sachant qu'au cas où le point $P_S$ de l'élément structural S vaut : $|\vec{F}_{EING,PS}| < |\vec{F}_{GRID}(POS_{PS})|$, il reste sur ce point réticulaire le plus proche ou dans ce volume de points réticulaires et/ou

  ◦ sur la base d'un espace d'orientation tridimensionnel virtuel discret prédéfini O, sachant que l'espace d'orientation tridimensionnel $O = : (\alpha_i, \beta_j, \gamma_k)$ est défini ou peut être défini avec $i = 1,2,...,I$, $j = 1,2,...J$, $k = 1,2...,K$ par un angle $\alpha_i, \beta_j, \gamma_k$ prédéfini, de telle manière que l'élément structural S est déplacé avec un couple $\vec{M}_O(\acute{O}R_S)$ prédéfini en fonction de l'orientation actuelle $\acute{O}R_S$ de l'élément structural S à l'orientation discrète la plus proche à cet effet de l'espace d'orientation tridimensionnel $O = : (\alpha_i, \beta_j, \gamma_k)$, sachant qu'au cas où l'élément structural S vaut : $|\vec{M}_{EING,S}| < |\vec{M}_O(\acute{O}R_S)|$, il reste dans cette orientation discrète la plus proche de l'espace d'orientation tridimensionnel O.

8. Robot selon la revendication 7,
pour lequel un champ potentiel tridimensionnel virtuel est défini dans l'espace de travail dont les minima locaux sont identiques aux points réticulaires du réseau tridimensionnel, sachant que la force $\vec{F}_{GRID}(POS_{PS})$ est déterminée à partir des gradients négatifs de ce champ potentiel.

9. Procédé selon la revendication 8,
pour lequel les minima locaux du champ potentiel tridimensionnel dans une zone d'espace prédéfinie comportent autour de chaque point réticulaire du réseau tridimensionnel, un potentiel constant, sachant que la zone d'espace comporte une extension maximale qui est plus petite que la distance réticulaire entre deux points réticulaires voisins.

10. Procédé selon l'une quelconque des revendications 7 à 9,
pour lequel au cas où au moins deux orientations les plus proches $O = : (\alpha_i, \beta_j, \gamma_k)$ comportent des différences identiques par rapport à l'orientation actuelle $OR_S$ de l'élément structural S, une de ces orientations $O = : (\alpha_i, \beta_j, \gamma_k)$ est sélectionnée selon un procédé prédéfini.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015113757 A